# EUROPÄISCHE PATENTANMELDUNG

(11) **EP 4 775 005 A1**
(43) Veröffentlichungstag der Anmeldung: **15.07.2026**
(21) Anmeldenummer: 25151456.8
(22) Anmeldetag: 13.01.2025
(51) Int. Cl.: A01B 63/111, A01B 63/114

(54) **VERFAHREN UND NUTZFAHRZEUG ZUR ERMITTLUNG EINER HÖHENPOSITION FÜR EINEN KRAFTHEBER**

(71) Anmelder: Deere & Company, Moline, IL 61265 (US)
(72) Erfinder: SCHREIECK, LUCAS, 68163 Mannheim (DE); MCMILLEN, BRANDON J, 68163 Mannheim (DE); AHER, NARENDRA ARJUN, 68163 Mannheim (DE); DUTTA, SAURAV, 68163 Mannheim (DE); THIRUVALLUVAN, SANDEEP, 68163 Mannheim (DE)
(74) Vertreter: Dehnhardt, Florian Christopher

(57) **Zusammenfassung**

Die Erfindung betrifft ein Verfahren zur Ermittlung einer einzustellenden Höhenposition (pos_h) für einen an einem Nutzfahrzeug (10) gelagerten und mit einem Anbaugerät (16) zur Bodenbearbeitung gekoppelten Kraftheber (14). Mittels eines Kraftsensors (22) wird eine am Kraftheber (14) wirkende Ist-Zugkraft (F_sen) ermittelt. Mittels eines Zusatzsensors (32) wird mindestens ein Bodenparameter (para_b) des bearbeiteten oder zu bearbeitenden Bodens (18, 20) ermittelt. Die einzustellende Höhenposition (pos_h) wird in Abhängigkeit von der Ist-Zugkraft (F_sen) und dem mindestens einen Bodenparameter (para_b) ermittelt. Weiterhin betrifft die Erfindung ein Nutzfahrzeug (10) mit einer Steuereinheit (24) zur Durchführung eines solchen Verfahrens.

## Beschreibung

Die Erfindung betrifft ein Verfahren und ein Nutzfahrzeug zur Ermittlung einer einzustellenden Höhenposition für einen Kraftheber, welcher an dem Nutzfahrzeug gelagert ist und mit einem Anbaugerät zur Bodenbearbeitung gekoppelt ist.

In der Landwirtschaft werden verschiedene Anbaugeräte zur Bodenbearbeitung eingesetzt. In vielen Fällen ist das Anbaugerät mit einem Kraftheber gekoppelt, welcher an dem Traktor höhenverstellbar gelagert ist. Die Einhaltung einer gewünschten Arbeitstiefe des Anbaugerätes erfolgt indirekt über die Erfassung einer Zugkraft am Traktor und einer geeigneten Steuerung für eine Einstellung der Höhenposition des Krafthebers. Abhängig von den jeweiligen Bodenverhältnissen kann auch durch eine Arbeitsperson oder den Fahrer des Traktors eine zusätzliche Korrektur der Höhenposition des Krafthebers erfolgen.

Der Erfindung liegt die Aufgabe zugrunde, eine Steuerung für die Einstellung der Höhenpositionen des Krafthebers während der Bodenbearbeitung zu verbessern.

Diese Aufgabe wird durch ein Verfahren mit den Merkmalen des unabhängigen Patentanspruchs 1 und durch ein Nutzfahrzeug mit den Merkmalen des unabhängigen Patentanspruchs 7 gelöst.

Weitere vorteilhafte Ausgestaltungen der Erfindung gehen aus den Unteransprüchen hervor.

Gemäß Anspruch 1 wird ein Verfahren zur Ermittlung einer einzustellenden Höhenposition für einen Kraftheber vorgeschlagen, welcher an einem Nutzfahrzeug gelagert und mit einem Anbaugerät zur Bodenbearbeitung (z.B. Pflug, Egge) gekoppelt ist. Dabei wird mittels eines Kraftsensors eine am Kraftheber aktuell wirkende Ist-Zugkraft erfasst. Mittels eines Umfeldsensors wird mindestens ein Bodenparameter des bearbeiteten oder zu bearbeitenden Bodens erfasst. In Abhängigkeit von der erfassten Ist-Zugkraft und dem erfassten mindestens einen Bodenparameter wird die Höhenposition für den Kraftheber ermittelt. Der Kraftheber kann dann auf geeignete Weise (z.B. durch Ansteuerung eines Hubzylinders des Krafthebers) auf die ermittelte Höhenposition eingestellt werden. Die ermittelte Höhenposition kann als eine Soll-Höhenposition für den Kraftheber betrachtet werden, welche durch eine geeignete Ansteuerung eingestellt wird. Hierzu ist beispielsweise eine die Soll-Höhenpositionen ermittelnde Steuereinheit vorgesehen, welche zur Einstellung bzw. Realisierung dieser Soll-Höhenpositionen den Kraftheber, z.B. den bereits erwähnten Hubzylinder, ansteuert.

Die Berücksichtigung der Daten bzw. Sensorsignale eines Zusatzsensors schafft eine datentechnisch effiziente Unterstützung einer Steuerung bzw. Regelung für eine präzisere Ermittlung der während der Bodenbearbeitung einzustellenden Höhenposition. Die Ermittlung mindestens eines Bodenparameters kann dabei helfen, unerwünschte Veränderungen der Höhenposition zu vermeiden. Beispielsweise kann hierdurch eine Steuerung erkennen, dass trotz Änderungen des Bodenparameters (z.B. unterschiedliche Bodenbeschaffenheit Ton, Lehm, Sand) und entsprechender Änderungen der Ist-Zugkraft eine Veränderung der Höhenposition unerwünscht ist, wenn die Oberfläche des Feldes gleichmäßig eben bzw. flach ist und die Arbeitstiefe des Anbaugerätes konstant bleiben soll. Da unerwünschte Veränderungen der Höhenpositionen vermieden werden, reduziert sich auch der manuelle Korrekturaufwand für die erwünschte Höhenposition durch eine Benutzerperson bzw. den Fahrer. Das Verfahren macht die Bodenbearbeitung folglich benutzungsfreundlicher und komfortabler.

Vorzugsweise umfasst der mindestens eine Bodenparameter eine Bodenkontur, eine Topographie des Bodens und/oder eine Bodenneigung. Die oder der Bodenparameter können oder kann insbesondere einen Oberflächenverlauf (z.B. Neigung, Steigung, Krümmung) im Bereich des zu bearbeitenden Bodens (z.B. unmittelbar vor dem Anbaugerät, dem Kraftheber oder dem Nutzfahrzeug) und/oder des bereits bearbeiteten Bodens (z.B. unmittelbar hinter dem Anbaugerät, dem Kraftheber oder dem Nutzfahrzeug) repräsentieren. Eine Berücksichtigung des mindestens einen Bodenparameters unterstützt ein korrektes Steuerungsverhalten bezüglich der Ermittlung und Einstellung der passendsten Höhenposition für den Kraftheber.

Weiter vorzugsweise wird der mindestens eine Bodenparameter in Abhängigkeit von fahrzeugbezogenen Sensordaten des Zusatzsensors ermittelt. Hierdurch können die Bodenparameter mit besonders geringem technischen Aufwand von fahrzeugbezogenen Sensordaten des Nutzfahrzeugs abgeleitet werden. Fahrzeugbezogene Sensordaten stehen standardmäßig ohnehin am Nutzfahrzeug, beispielsweise an dessen Daten- und/oder Steuerbus (z.B. ISO, CAN) zur Verfügung, so dass die interessierenden Bodenparameter ohne technischen Mehraufwand ermittelt werden können. Relevante fahrzeugbezogene Sensordaten für die Ermittlung des mindestens einen Bodenparameters sind insbesondere eine Winkellage und/oder eine Orientierung und/oder eine Position des Nutzfahrzeugs bezüglich einer Horizontalen und/oder einer anderen Bezugslinie. Der Zusatzsensor ist insbesondere als eine inertiale Messeinheit (auch IMU, Inertial Measurement Unit), ausgebildet.

Während der Bodenbearbeitung wird die Ist-Zugkraft ermittelt und somit kann auch eine Veränderung der Ist-Zugkraft erfasst bzw. ermittelt werden. Hierbei können die Veränderung der Ist-Zugkraft und der oder die Bodenparameter mathematisch bzw. in einem Algorithmus sinnvoll verknüpft werden, um die einzustellende Höhenposition zu ermitteln.

In einer bevorzugten Ausführungsform wird die Veränderung der Ist-Zugkraft abhängig von dem mindestens einen ermittelten Bodenparameter unterschiedlich gewichtet, um die Höhenposition des Krafthebers zu ermitteln. Somit kann die Abhängigkeit der einzustellenden Höhenposition von den sich verändernden Ist-Zugkräften physikalisch sinnvoll an unterschiedliche Bodenverhältnisse (z.B. Bodentypen, Bodenneigung) angepasst werden.

Die unterschiedliche Wichtung kann, beispielsweise in einer Formel oder einem Algorithmus zur Ermittlung der Höhenposition, durch einen Wichtungsfaktor mit unterschiedlichen Zahlenwerten repräsentiert werden. Diese Zahlenwerte sind von dem mindestens einen ermittelten Bodenparameter bzw. von deren Werten abhängig. Somit kann der Wichtungsfaktor hinsichtlich seiner Zahlenwerte derart definiert werden, dass er eine effiziente und präzise Korrektur bzw. neue Einstellung der Höhenposition des Krafthebers bei variierenden Bodenverhältnissen ermöglicht.

Die unterschiedliche Wichtung für die veränderte Ist-Zugkraft ist insbesondere im Zusammenhang mit einer ermittelten Bodenneigung als Bodenparameter sinnvoll. Hierbei ist es von Vorteil, wenn die Wichtung bei einer ermittelten Bodenneigung m ≠ 0 größer ist als bei einer ermittelten Bodenneigung m = 0. Auf diese Weise hat die ermittelte Bodenneigung einen signifikanten Einfluss darauf, ob und in welchem Ausmaß die Höhenposition des Krafthebers bei einer veränderten Ist-Zugkraft geändert werden soll. Unerwünschte Veränderungen der Höhenposition und somit der Arbeitstiefe können hierdurch mit geringem technischen Aufwand vermieden werden. Dies unterstützt eine präzise Bodenbearbeitung bei unterschiedlichen Bodenverhältnissen. Beispielsweise soll bei einer ermittelten Bodenneigung m = 0 trotz veränderter Ist-Zugkraft die Höhenposition des Krafthebers unverändert bleiben, was mit einer entsprechend definierten Wichtung der veränderten Ist-Zugkraft in Abhängigkeit der Bodenneigung möglich ist. Somit können unerwünschte Veränderungen der Arbeitstiefe bzw. der Höhenposition des Krafthebers bei ebenem Gelände trotz unterschiedlicher oder variierender Bodentypen (z.B. Ton, Lehm, Sand) automatisch vermieden werden.

Die Erfindung betrifft weiter ein Nutzfahrzeug mit einem daran gelagerten Kraftheber, welcher mit einem Anbaugerät zur Bodenbearbeitung gekoppelt ist. Das Nutzfahrzeug weist einen Kraftsensor zur Ermittlung einer am Kraftheber wirkenden Ist-Zugkraft auf. Weiterhin weist das Nutzfahrzeug einen Zusatzsensor zur Ermittlung mindestens eines Bodenparameters des bearbeiteten oder zu bearbeitenden Bodens auf. Eine Steuereinheit des Nutzfahrzeugs ermittelt eine einzustellende Höhenposition für den Kraftheber in Abhängigkeit von der Ist-Zugkraft und dem mindestens einen Bodenparameter.

Das erfindungsgemäße Nutzfahrzeug weist die oben beschriebenen Vorteile des erfindungsgemäßen Verfahrens auf. Dabei können mit einer von Bodenparametern abhängigen Anpassung der Höhenposition eine präzise Bodenbearbeitung unterstützt und unerwünschte Veränderungen der Arbeitstiefe des Anbaugerätes mit geringem technischen Aufwand vermieden werden. Insbesondere kann auch bei topographischen Unregelmäßigkeiten eine möglichst konstante Arbeitstiefe des Anbaugerätes mit geringerem oder ganz ohne manuellen Korrekturaufwand aufrechterhalten werden. Hierdurch kann die Arbeitsperson bzw. der Fahrer des Nutzfahrzeugs während der Bodenbearbeitung entlastet werden.

Vorzugsweise ist der Zusatzsensor als eine inertiale Messeinheit (auch genannt IMU, Inertial Measurement Unit) ausgebildet. Diese Messeinheit trägt mit ihren Sensordaten dazu bei, dass beispielsweise eine Beschleunigung, eine Winkelgeschwindigkeit und eine Orientierung des Zusatzsensors ermittelbar sind. Da diese Messeinheit am Nutzfahrzeug angeordnet ist, lassen sich hierdurch fahrzeugbezogene Sensordaten wie etwa eine Position, Winkellage oder Orientierung des Nutzfahrzeugs (z.B. relativ zu einer Horizontalen) gewinnen. In Abhängigkeit von diesen Sensordaten kann der mindestens eine Bodenparameter ermittelt werden. Die vorgenannte inertiale Messeinheit ist oftmals standardmäßig am Nutzfahrzeug (z.B. einem Traktor) vorhanden und unterstützt deshalb in vielen Fällen ohne technischen Mehraufwand eine besonders präzise Ermittlung der gewünschten Höhenposition für den Kraftheber.

Der Kraftheber ist insbesondere als ein Dreipunkt-Kraftheber aufgebaut. Vorteilhaft ist der Kraftheber als ein Heck-Kraftheber ausgebildet, welcher im Heckbereich des Nutzfahrzeugs gelagert für eine effiziente Bodenbearbeitung eingesetzt werden kann.

Vorzugsweise handelt es sich bei dem Nutzfahrzeug um ein landwirtschaftliches Nutzfahrzeug, insbesondere Schlepper bzw. Traktor, welches mit einem Kraftheber und einem Anbaugerät zur Bodenbearbeitung (z.B. Feld, Acker, Wiese) kombiniert wird. Die Bodenbearbeitung beinhaltet beispielsweise ein Umpflügen des Bodens oder eine Bodenvorbereitung für ein tiefengenaues Einpflanzen von Saatgut oder Pflanzen, z.B. Blumenzwiebeln.

Die Erfindung wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: eine schematische Seitenansicht eines erfindungsgemäßen Nutzfahrzeugs mit einem daran gelagerten Kraftheber, und
- Fig. 2: eine schematische Seitenansicht des erfindungsgemäßen Nutzfahrzeugs auf hügeligem Gelände,
- Fig. 3: eine blockschaltbildartige Darstellung mit einer Steuereinheit zur Ansteuerung des Krafthebers, und
- Fig. 4: eine weitere blockschaltbildartige Darstellung mit der Steuereinheit zur Ansteuerung des Krafthebers.

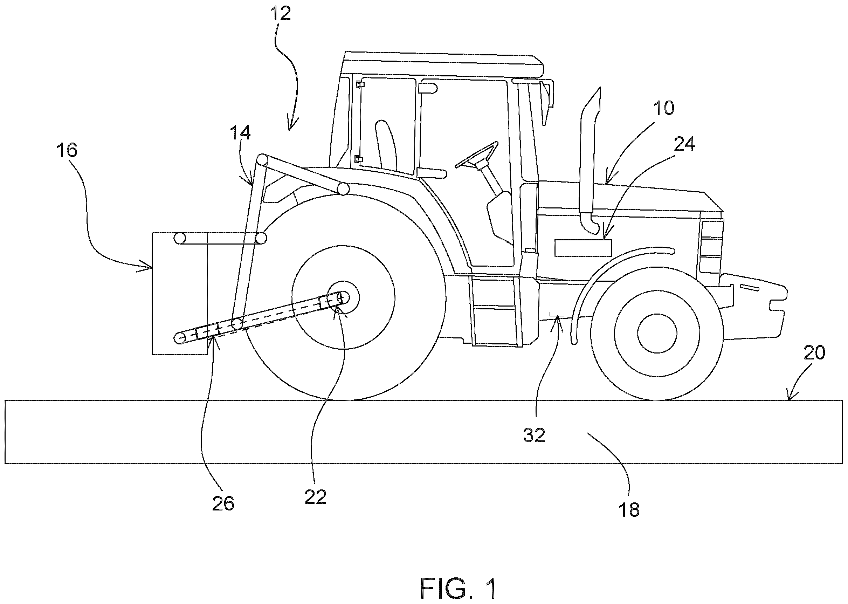

Fig. 1 zeigt ein landwirtschaftliches Nutzfahrzeug 10 in Form eines Traktors bzw. Schleppers mit einem an dessen Heckbereich 12 gelagerten Kraftheber 14 bzw. Heck-Kraftheber. Der Kraftheber 14 ist mit einem hier lediglich schematisch dargestellten Anbaugerät 16 zur Bodenbearbeitung (z.B. Pflug, Egge) gekoppelt. Die Bodenbearbeitung beinhaltet beispielsweise die Herstellung einer Furche in das Erdreich 18 eines landwirtschaftliches Feldes 20 mit einer gleichmäßigen Furchentiefe für das Einpflanzen von Saatgut oder Pflanzen.

Am Kraftheber 14 ist ein Kraftsensor 22 angeordnet, welcher eine am Nutzfahrzeug 10 bzw. am Kraftheber 14 aktuell angreifende Ist-Zugkraft F_sen erfasst. Die Ist-Zugkraft F_sen repräsentiert einen mechanischen Widerstand des Erdreichs 18 gegen das Anbaugerät 16 bzw. den Kraftheber 14. Die Signale des Kraftsensors 22 werden einer Steuereinheit 24 des Nutzfahrzeugs 10 zugeführt, welche den Kraftheber 14, insbesondere einen Aktuator (z.B. Hubzylinder) des Krafthebers 14 in Abhängigkeit von den Signalen des Kraftsensors 22 und weiteren noch zu beschreibenden Signalen ansteuert. Somit kann die jeweilige Höhenposition pos_h des Krafthebers 14 durch die Steuereinheit 24 ermittelt und eingestellt werden. Hierbei greift die Steuereinheit 24 u.a. auf die Sensordaten eines am Nutzfahrzeug 10, insbesondere am Kraftheber 14, angeordneten Positionssensor 26 zu.

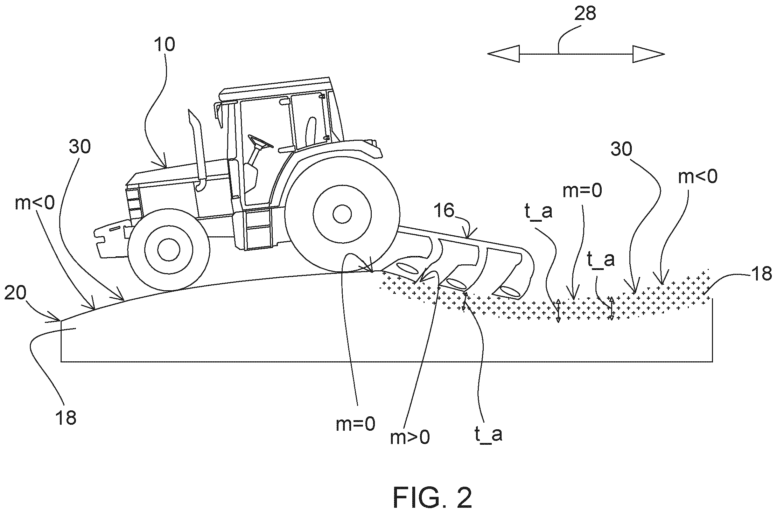

Fig. 2 zeigt das Nutzfahrzeug 10 bzw. den Traktor bei der Überfahrt über hügeliges Gelände als landwirtschaftliches Feld 20. Das hügelige Gelände ist durch eine gegenüber einer Horizontalen 28 variierende Bodenkontur 30 bzw. einen variierenden Oberflächenverlauf charakterisiert. Mit anderen Worten weist die Bodenkontur 30 unterschiedliche Bodenneigungen m auf. Beispielsweise ist in Fahrtrichtung unmittelbar vor dem Nutzfahrzeug 10 die Bodenneigung m < 0, während unmittelbar hinter dem Nutzfahrzeug 10 die Bodenneigung m > 0 ist. An anderen Stellen der Bodenkontur 30 ist die Bodenneigung m = 0. An diesen Stellen ist die Bodenkontur 30 etwa parallel zur Horizontalen 28.

In Fig. 2 ist angedeutet, dass trotz der unregelmäßigen Bodenkontur 30 und/oder trotz variierender Bodenbeschaffenheit bzw. Bodentypen (z.B. Ton, Lehm, Sand) in dem zu bearbeitenden landwirtschaftlichen Feld 20 eine gleichmäßige bzw. möglichst konstante Arbeitstiefe t_a erreicht werden soll.

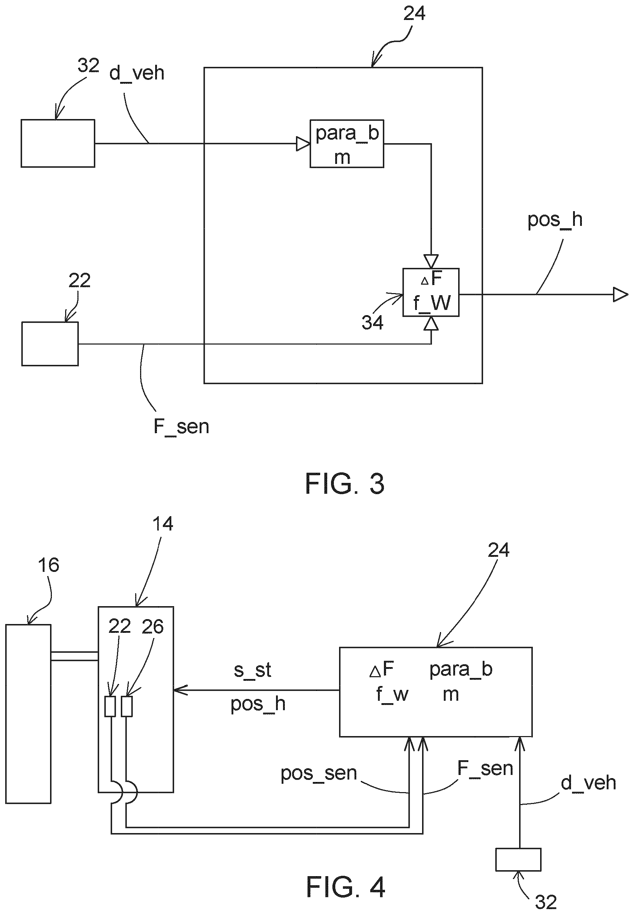

Zu diesem Zweck verarbeitet die Steuereinheit 24 neben den Sensordaten des Kraftsensors 22 u.a. auch Sensordaten eines Zusatzsensors 32 (Fig. 3). Der Zusatzsensor 32 ist als eine inertiale Messeinheit (auch IMU, Inertial Measurement Unit) ausgebildet, welche am Nutzfahrzeug 10 angeordnet ist und fahrzeugbezogene Sensordaten d_veh generiert. Diese Sensordaten d_veh repräsentieren beispielsweise eine Winkellage und/oder eine Orientierung und/oder eine Position des Nutzfahrzeugs 10 bezüglich der Horizontalen 28 und/oder einer anderen Bezugslinie. Ausgehend von den fahrzeugbezogenen Sensordaten d_veh wird in der Steuereinheit 24 mindestens ein Bodenparameter para_b abgeleitet bzw. ermittelt. Als Bodenparameter para_b werden beispielsweise die Bodenkontur 30 und/oder die Bodenneigung m und/oder weitere Merkmale des landwirtschaftliches Feldes 20 verwendet.

Der mindestens eine Bodenparameter para_b und die ermittelte Ist-Zugkraft F_sen werden in der Steuereinheit 24 - ggf. unter Berücksichtigung weiterer Daten - verarbeitet, um die aktuell einzustellende Höhenposition pos_h für den Kraftheber 14 zu ermitteln.

Vorzugsweise werden der mindestens eine Bodenparameter para_b und die ermittelte Ist-Zugkraft F_sen in einem Steueralgorithmus 34 der Steuereinheit 24 verarbeitet. Der Steueralgorithmus 34 kann die Höhenposition pos_h ermitteln bzw. berechnen. Dabei kann für die Ermittlung der einzustellenden Höhenposition pos_h eine festgestellte Veränderung ΔF der Ist-Zugkraft F_sen in Abhängigkeit von dem ermittelten mindestens einen Bodenparameter para_b unterschiedlich gewichtet werden.

Die Wichtung der Veränderung ΔF der Ist-Zugkraft F_sen kann durch einen Wichtungsfaktor f_W repräsentiert werden. Der Wert des Wichtungsfaktors f_W ist vorzugsweise von dem ermittelten mindestens einen Bodenparameter para_b abhängig. Insbesondere ist der Wert des Wichtungsfaktors f_W bei einer ermittelten Bodenneigung m ≠ 0 größer als bei einer ermittelten Bodenneigung m = 0. Mit anderen Worten ist der Einfluss von Veränderungen der Ist-Zugkraft F_sen auf die Ermittlung der Höhenposition pos_h in einem unebenen Feld 20 größer als in einem flachen, insbesondere etwa horizontal verlaufenden Feld 20. Hierdurch können vermeintlich notwendige Änderungen der Höhenposition pos_h von vornherein vermieden werden, welche dann wieder manuell korrigiert werden müssten. Beispielsweise ist auf einem ebenen Feld 20 mit einer Bodenneigung m = 0 trotz einer registrierten Veränderung ΔF der Ist-Zugkraft F_sen in den meisten Anwendungsfällen eine Veränderung der Höhenposition pos_h unerwünscht, weil dann die erwünschte konstante Arbeitstiefe t_a nicht mehr eingehalten würde. Für solche Fälle kann der Wichtungsfaktor f_W = 0 definiert werden, so dass eine Veränderung ΔF der Ist-Zugkraft F_sen keine geänderte Höhenposition pos_h generiert.

Fig. 4 zeigt die Steuereinheit 24 mit verschiedenen Eingangs- und Ausgangssignalen, in deren Abhängigkeit der Kraftheber 14, insbesondere ein Aktuator (z.B. hydraulischer Hubzylinder), zur Einstellung der ermittelten Höhenposition pos_h angesteuert wird.

Ganz allgemein generiert die Steuereinheit 24 Steuersignale s_st als Ausgangssignale, um den Kraftheber 14 zur Einstellung der ermittelten Höhenposition pos_h anzusteuern.

Als Eingangssignale sind u.a. die Signale bzw. Daten F_sen des Kraftsensors 22 und Signale bzw. Daten pos_sen des Positionssensors 26 im Bereich des Krafthebers 14 wirksam. Auch der Zusatzsensor 32 liefert Eingangssignale in Form der Sensordaten d_veh für die Steuereinheit 24. Weitere Eingangssignale für die Steuereinheit 24 können von einem oder mehreren hier nicht dargestellten Bedienelementen generiert werden. Solche Bedienelemente (z.B. ein rotationsbewegliches Bedienrad) können vorgesehen sein, um beispielsweise der Arbeitsperson bzw. dem Fahrer des Nutzfahrzeugs 10 die Möglichkeit zu geben, während der Bodenbearbeitung spezifische Einstellungen (z.B. Steigung einer Kennlinie, manuelle Vorgabe einer Soll-Höhenposition) im Zusammenhang mit der Ermittlung der Höhenposition pos_h zu ändern.

## Patentansprüche

1. Verfahren zur Ermittlung einer einzustellenden Höhenposition (pos_h) für einen an einem Nutzfahrzeug (10) gelagerten und mit einem Anbaugerät (16) zur Bodenbearbeitung gekoppelten Kraftheber (14), wobei
- mittels eines Kraftsensors (22) eine am Kraftheber (14) wirkende Ist-Zugkraft (F_sen) ermittelt wird,
- mittels eines Zusatzsensors (32) mindestens ein Bodenparameter (para_b) des bearbeiteten oder zu bearbeitenden Bodens (18, 20) ermittelt wird, und
- die einzustellende Höhenposition (pos_h) in Abhängigkeit von der Ist-Zugkraft (F_sen) und dem mindestens einen Bodenparameter (para_b) ermittelt wird.

2. Verfahren nach Anspruch 1, **dadurch gekennzeichnet, dass** der mindestens eine Bodenparameter (para_b) eine Bodenkontur (30) und/oder eine Bodenneigung (m) beinhaltet.

3. Verfahren nach Anspruch 1 oder 2, **dadurch gekennzeichnet, dass** der mindestens eine Bodenparameter (para_b) in Abhängigkeit von fahrzeugbezogenen Sensordaten (d_veh) des Zusatzsensors (32) ermittelt wird.

4. Verfahren nach einem der vorhergehenden Ansprüche, **dadurch gekennzeichnet, dass** eine Veränderung (ΔF) der Ist-Zugkraft (F_sen) für die Ermittlung der einzustellenden Höhenposition (pos_h) abhängig von dem mindestens einen Bodenparameter (para_b) unterschiedlich gewichtet wird.

5. Verfahren nach Anspruch 4, **dadurch gekennzeichnet, dass** die Wichtung der Veränderung (ΔF) der Ist-Zugkraft (F_sen) durch einen Wichtungsfaktor (f_W) repräsentiert wird, dessen Wert von dem mindestens einen Bodenparameter (para_b) abhängig ist.

6. Verfahren nach Anspruch 4 oder 5, **dadurch gekennzeichnet, dass** die Wichtung der Veränderung (ΔF) der Ist-Zugkraft (F_sen) bei einer ermittelten Bodenneigung (m) ungleich Null größer ist als bei einer ermittelten Bodenneigung (m) gleich Null.

7. Nutzfahrzeug (10) mit einem daran gelagerten Kraftheber (14), welcher mit einem Anbaugerät (16) zur Bodenbearbeitung gekoppelt ist, mit einem Kraftsensor (22) zur Ermittlung einer am Kraftheber wirkenden Ist-Zugkraft (F_sen), mit einem Zusatzsensor (32) zur Ermittlung mindestens eines Bodenparameters (para_b) des bearbeiteten oder zu bearbeitenden Bodens (18, 20) und mit einer Steuereinheit (24) zur Ermittlung einer einzustellenden Höhenposition (pos_h) für den Kraftheber (14) in Abhängigkeit von der Ist-Zugkraft (F_sen) und dem mindestens einen Bodenparameter (para_b).

8. Nutzfahrzeug nach Anspruch 7, **dadurch gekennzeichnet, dass** der Zusatzsensor (32) als eine inertiale Messeinheit ausgebildet ist.

9. Nutzfahrzeug nach Anspruch 7 oder 8, **dadurch gekennzeichnet, dass** der Kraftheber (14) als ein Heck-Kraftheber ausgebildet ist.

10. Nutzfahrzeug nach einem der Ansprüche 7 bis 9, **gekennzeichnet durch** ein landwirtschaftliches Nutzfahrzeug (10) .
